# EUROPEAN PATENT SPECIFICATION

(11) **EP 0 505 178 B1**
(45) Date of publication and mention of the grant of the patent: **20.07.1994**
(21) Application number: 92302369.1
(22) Date of filing: 19.03.1992
(51) Int. Cl.: B29D 30/68

(54) **Regrooving tool**
Werkzeug zum Erneuern von Profilen
Dispositif de rerainurage

(30) Priority: 22.03.1991 GB 9106164
(43) Date of publication of application: 23.09.1992
(73) Proprietor: SUMITOMO RUBBER INDUSTRIES LIMITED, Chuo-ku Kobe-shi Hyogo 651 (JP)
(72) Inventor: Kemp, Ian, Wilnecote, Tamworth, Staffs (GB)
(74) Representative: Stewart, Charles Geoffrey

(56) References cited:
- US-A- 2 097 811
- US-A- 2 254 974
- US-A- 3 626 599

## Description

This invention relates to a tyre regrooving tool and in particular to a tool wherein the position of the regrooving blade relative to the base of the grooves of the tread pattern of the tyre being regrooved is kept constant.

Most commercial vehicle tyres and in particular truck tyres are designed with sufficient thickness of rubber between the base of the tread pattern grooves and the outermost breaker ply to allow regrooving which maximises the mileage obtained from the tread rubber provided in each tyre.

Regrooving is carried out using a hand operated grooving tool usually having a heated cutting blade. In existing regrooving tools (US-A-2254974), the blade is set to protrude a certain distance below the baseplate or soleplate of the tool. This distance is determined by the person carrying out the regrooving operation based on measurement of the depth of tread pattern remaining on the tyre and the tyre manufacturer's recommendation regarding how deep the blade can cut into the rubber between the base of the tread pattern groove and the surface of the radially outermost breaker ply, which is normally called the underpattern rubber. The distance the blade is set to protrude is the sum of the pattern depth remaining and the depth to which the underpattern rubber can be removed.

The setting of the blade cannot be specified exactly by the tyre manufacturer because it is dependent on the pattern depth remaining when the tyre user decides that the tyre will be regrooved. Also many tyres wear unevenly so that the pattern depth remaining is variable. Tyre manufacturers usually specify that the pattern depth remaining should be measured at several positions around the tyre and that the minimum pattern depth found should be used to set the cutter blade. The person regrooving the tyre must remember the minimum pattern depth found and add to this the tyre manufacturer's recommended regrooving depth and set the blade using a rule or feeler gauge. Thus the setting of the blade is very reliant on the skill and diligence of the person doing the regrooving.

The blade may be set to protrude too far below the baseplate because of an error in measurement or misinterpretation of the tyre manufacturer's recommendation or the position of minimum pattern depth remaining having been missed when the tyre was measured. The regrooving tool baseplate follows the contours of the tread surface and the blade is fixed relative to the baseplate. This means that if the blade protrudes too far, when the tool is passing over a portion of the tread surface which is more worn away than adjacent areas the blade will cut away more of underpattern rubber and in some cases expose the wires of the outermost breaker ply.

This problem makes regrooving at best uncertain and a percentage of attempted regroovings result in breaker damage and it is then necessary to send the tyre for remoulding. If corrosion has occurred it may be necessary to remove at least the top breaker layer. Extensive corrosion may render the tyre unsuitable even for retreading.

It is an object of the present invention to provide a regrooving tool which in use automatically and continuously adjusts its blade depth setting so that the correct thickness of rubber is left over the outermost breaker ply regardless of the pattern depth remaining on the tyre tread.

According to one aspect of the present invention a tyre regrooving tool comprises a soleplate having a bottom surface for contacting a tyre tread surface, a depth sensing probe movable with respect to the soleplate and having a probe end projecting below the bottom surface of the soleplate for contacting the base of a tyre tread groove, a regrooving blade adjacent to the probe also movable with respect to the soleplate and projecting below the bottom surface of the soleplate and blade moving means between the probe and the blade so that movement of the probe causes similar movement of the regrooving blade and means are provided to keep the probe end in contact with the base of the tread groove when the bottom surface of the soleplate is in contact with the tread.

According to another aspect of the present invention a method of regrooving a tyre using the regrooving tool of the present invention whereby the depth sensing probe is inserted into a tyre tread groove to contact the base of the groove, the bottom surface of the soleplate is brought into contact with the tread surface and the tool is moved around the circumference of the tyre so that the regrooving blade cuts a new tread groove.

Preferably the probe and the blade move in the same direction by an equal amount and the difference by which the blade projecting distance exceeds the probe projecting distance is equal to the recommended regrooving depth under the original tyre tread pattern.

It is preferable that the blade is set at an angle of 0 to 5 degrees to the plane normal to the plane of the soleplate so that the blade is inclined backwards with respect to the direction of cutting.

It is also preferable that the probe end in contact with the tyre tread groove base is rounded or more preferably a roller or roller ball so that it cam move easily in the groove.

Further aspects of the present invention will become apparent from the following description, by way of example only, of some embodiments in conjunction with the attached diagrammatic drawings in which:
Figure 1 shows a schematic sectional view of a regrooving tool according to the present invention;
Figures 2 and 3 are schematic views of the regrooving tool of Figure 1 in the direction of arrows A and B respectively;
Figure 4 is a view of the blade, probe, blade holder, sliding member and blade holder carriage assembly of Figure 1 in the direction of arrow C;
Figure 5 shows the probe in the fully retracted position; and
Figure 6 shows an alternative method of fixing the probe to the sliding member; and
Figure 7 shows the inclination of the blade with respect the soleplate.

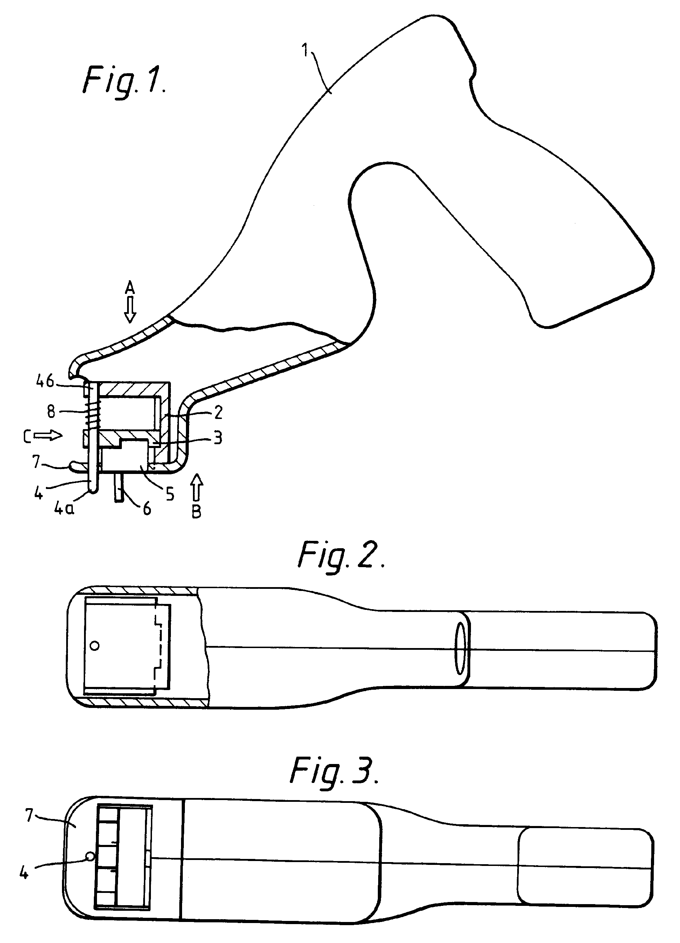

In the first embodiment of the present invention the regrooving tool shown in Figure 1 comprises a stock 1 in which is mounted a blade holder carriage 2. Within the blade holder carriage 2 is slideably mounted a sliding member 3 to which is fixed a probe 4 and a blade holder 5. The probe 4 and blade holder 5 pass through a hole provided in a soleplate 7 which is fixed to the stock 1 for contacting the tyre tread surface. The probe 4 has an end 4a projecting below the bottom surface of the soleplate 7 for contacting the base of a tyre tread groove. The blade holder 5 holds a regrooving blade 6 which also projects below the bottom surface of the soleplate 7 for re-cutting the grooves of a tyre tread. Another end of the probe 4b passes slideably through the top of the blade holder carriage 2 and the assembly of probe 4, sliding member 3, blade holder 5 and blade 6 are held in the fully extended state as shown in Figure 1 by the force provided by the spring 8. In this fully extended state the blade holder 5 is flush with bottom surface of the soleplate 7 whilst both the probe end 4a and the blade 6 project below the bottom surface of the soleplate 7.

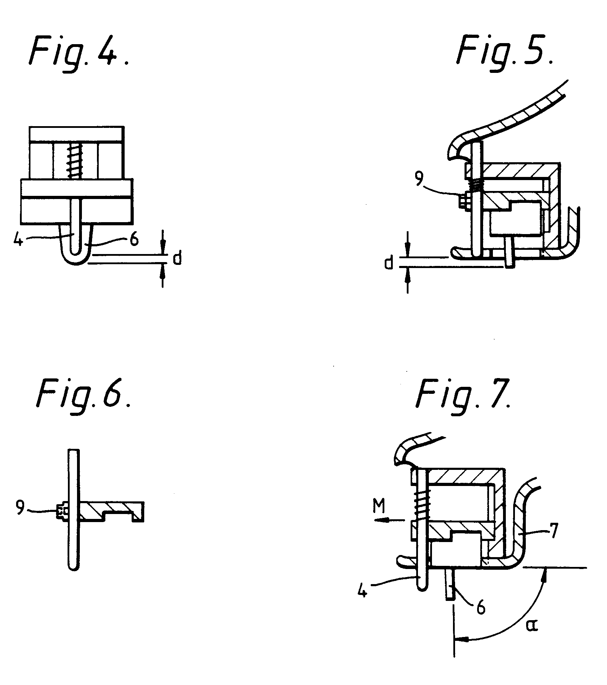

In this embodiment, as shown in Fig.7, the blade 6 is inclined backwards with respect to the direction movement of the tool which is in the direction shown by arrow M. Here the blade is inclined at 2 degrees so that the angle α, between the axis of the blade and the plane of the soleplate 7, is 88 degrees. The value of the angle α may be in the range of 85 to 90 degrees.

The distance d by which the blade projecting distance exceeds the probe projecting distance corresponds to the depth below the base of the original groove that the new groove will be cut. The recommended value for the distance d for a particular tyre may be derived from the manufacturers regrooving literature by subtracting the recommended conventional blade setting. The distance d on the regrooving tool of the present invention may then be set by altering the probe projecting distance by changing the position of the probe 4 relative to the sliding member 3. Figure 6 shows how the probe 4 may be fixed to sliding member 3 by a clamp screw 9 to enable the probe to be moved and clamped in a new position relative to the sliding member 3. In this embodiment the regrooving depth may be conveniently set, as shown in figure 5, by pushing the probe 4 and the clamped assembly of the sliding member 3, blade holder 5 and blade 6 to the position where the probe end 4a is flush with the bottom surface of the soleplate 7. The blade may then be set by releasing the sliding assembly 3,5,6 from the probe by releasing the clamp screw 9, and moving the sliding assembly 3,5,6 so that the blade tip projects the required distance d from the bottom surface of the soleplate. The clamp screw 9 is then tightened and the regrooving tool is ready for use.

The regrooving tool of the present invention is used in a similar manner to the conventional regrooving tool except that the probe end 4a is positioned in contact with the base of the original tread grooves slightly in front of the cutting blade. Sufficient pressure is applied to the stock 1 of the regrooving tool to force the sliding member 3 to slide into the blade holder carriage 2 against the action of the spring 8 until the bottom surface of the soleplate 7 comes in to contact with worn tyre surface. Regrooving is then carried out in the conventional way with the advantage that the blade depth with respect to the base of the groove remains fixed and independent of the projecting distance below the soleplate 7 so that the depth of the new cut is always correct and independent of the pattern depth remaining or variations thereof.

Thus the regrooving tool of the present invention provides a convenient tool which ensures correct and consistent regrooving regardless of variations in remaining pattern depth.

## Claims

1. A tyre regrooving tool comprising a soleplate (7) having a bottom surface for contacting a tyre tread surface, a depth sensing probe (4) movable with respect to the soleplate (7) and having a probe end (4a) projecting below the bottom surface of the soleplate (7) for contacting the base of a tyre tread groove, a regrooving blade (6) adjacent to the probe (4) also movable with respect to the soleplate (7) and projecting below the bottom surface of the soleplate (7) and blade moving means between the probe (4) and the blade (6) so that movement of the probe (4) causes similar movement of the regrooving blade (6) and means are provided to keep the probe end (4a) in contact with the base of the tread groove when the bottom surface of the soleplate (7) is in contact with the tread.

2. A tyre regrooving tool according to claim 1 characterised in that the blade moving means between the probe (4) and the blade (6) comprises a mechanical linkage.

3. A tyre regrooving tool according to claims 1 or 2 characterised in that the movements of the probe (4) and the regrooving blade (6) are of the same magnitude and in the same direction.

4. A regrooving tool according to Claim 1, 2 or 3 characterised in that the regrooving blade projecting distance exceeds the probe end projecting distance by an amount (d) equal to the recommended regrooving depth under the original tyre tread pattern.

5. A regrooving tool according to any of Claims 1 to 4 characterised in that the width of the probe end (4a) is 5mm or less.

6. A tyre regrooving tool according to any of claims 1 to 5 characterised in that the plane of the regrooving blade (6) is inclined at an angle (α) of 85 to 90 degrees with respect to the to the plane of the soleplate (7) so that the tip of the regrooving blade trails with respect to the direction of movement of the regrooving tool.

7. A tyre regrooving tool according to any of claims 1 to 5 characterised in that the plane of the regrooving blade is inclined at an angle (α) of 88 to 90 degrees with respect to the to the plane of the soleplate (7) so that the tip of the regrooving blade trails with respect to the direction of movement of the regrooving tool.

8. A regrooving tool according to any of Claims 1 to 7 characterised in that the probe end (4a) is rounded so that it may easily slide along the base of a tyre tread groove.

9. A regrooving tool according to any of Claims 1 to 8 characterised in that the probe end (4a) comprises a roller.

10. A regrooving tool according to any of Claims 1 to 9 charactherised in that the probe end (4a) comprises a roller ball.

11. A regrooving tool according to any of Claims 1 to 10 characterised in that the means to keep the probe end (4a) in contact with the base of the tread groove when the bottom surface of the soleplate (7) is in contact with the tread is by spring means.

12. A method of regrooving a tyre using the regrooving tool of any of claims 1 to 11 characterised in that the depth sensing probe (4) is inserted into a tyre tread groove to contact the base of the groove, the bottom surface of the soleplate (7) is brought into contact with the tread surface and the tool is moved around the circumference of the tyre so that the regrooving blade (6) cuts a new tread groove.

13. A method of regrooving a tyre according to claim 12 characterised in that the probe (4) and the blade (6) are set such that the projecting distance below the bottom surface of the soleplate (7) of the blade (6) exceeds that of the probe by an amount (d) equal to the recommended regrooving depth under the original pattern.

## Patentansprüche

1. Ein Reifenprofilerneuerungswerkzeug mit einer Grundplatte (7), die eine Bodenfläche zum Berühren einer Reifenlaufflächenoberfläche aufweist, einem Tiefenwahrnehmungsfühler (4), der bezüglich der Grundplatte (7) bewegbar ist und ein Fühlerende (4a) aufweist, das unterhalb der Bodenfläche der Grundplatte (7) zum Berühren des Grunds einer Reifenlaufflächennut vorsteht, einer Profilerneuerungsklinge (6) benachbart dem Fühler (4), die auch bezüglich der Grundplatte (7) bewegbar ist und unterhalb der Bodenfläche der Grundplatte (7) vorsteht, und Klingenbewegungsmitteln zwischen dem Fühler (4) und der Klinge (6), so daß eine Bewegung des Fühlers (4) eine gleichartige Bewegung der Profilerneuerungsklinge (6) verursacht und Mittel vorgesehen sind, um das Fühlerende (4a) in Kontakt mit dem Grund der Laufflächennut zu halten, wenn sich die Bodenfläche der Grundplatte (7) in Kontakt mit der Lauffläche befindet.

2. Ein Reifenprofilerneuerungswerkzeug nach Anspruch 1,
dadurch **gekennzeichnet**,
daß das Klingenbewegungsmittel zwischen dem Fühler (4) und der Klinge (6) eine mechanische Verbindung umfaßt.

3. Ein Reifenprofilerneuerungswerkzeug nach Anspruch 1 oder 2,
dadurch **gekennzeichnet**,
daß die Bewegungen des Fühlers (4) und der Profilerneuerungsklinge (6) gleich groß und gleichgerichtet sind.

4. Ein Profilerneuerungswerkzeug nach Anspruch 1, 2 oder 3,
dadurch **gekennzeichnet**,
daß der Profilerneuerungsklingenvorstehabstand den Fühlerendevorstehabstand um einen Betrag (d) übersteigt, der gleich der empfohlenen Profilerneuerungstiefe unter dem ursprünglichen Reifenlaufflächenprofil ist.

5. Ein Profilerneuerungswerkzeug nach einem der Ansprüche 1 bis 4,
dadurch **gekennzeichnet**,
daß die Breite des Fühlerendes (4a) 5 mm oder weniger ist.

6. Ein Reifenprofilerneuerungswerkzeug nach einem der Ansprüche 1 bis 5,
dadurch **gekennzeichnet**,
daß die Ebene der Profilerneuerungsklinge (6) unter einem Winkel (α) von 85 bis 90 Grad bezüglich der Ebene der Grundplatte (7) geneigt ist, so daß die Spitze der Profilerneuerungsklinge bezüglich der Bewegungsrichtung des Profilerneuerungswerkzeugs nachläuft.

7. Ein Reifenprofilerneuerungswerkzeug nach einem der Ansprüche 1 bis 5,
dadurch **gekennzeichnet**,
daß die Ebene der Profilerneuerungsklinge unter einem Winkel (α) von 88 bis 90 Grad bezüglich der Ebene der Grundplatte (7) geneigt ist, so daß die Spitze der Profilerneuerungsklinge bezüglich der Bewegungsrichtung des Profilerneuerungswerkzeugs nachläuft.

8. Ein Profilerneuerungswerkzeug nach einem der Ansprüche 1 bis 7,
dadurch **gekennzeichnet**,
daß das Fühlerende (4a) gerundet ist, so daß es leicht entlang des Grunds einer Reifenlaufflächennut gleiten kann.

9. Ein Profilerneuerungswerkzeug nach einem der Ansprüche 1 bis 8,
dadurch **gekennzeichnet**,
daß das Fühlerende (4a) eine Rolle umfaßt.

10. Ein Profilerneuerungswerkzeug nach einem der Ansprüche 1 bis 9,
dadurch **gekennzeichnet**,
daß das Fühlerende (4a) eine Rollkugel umfaßt.

11. Ein Profilerneuerungswerkzeug nach einem der Ansprüche 1 bis 10,
dadurch **gekennzeichnet**,
daß das Mittel, um das Fühlerende (4a) in Kontakt mit dem Grund der Laufflächennut zu halten, wenn sich die Bodenfläche der Grundplatte (7) in Kontakt mit der Lauffläche befindet, ein Federmittel ist.

12. Ein Verfahren zur Profilerneuerung eines Reifens, welches das Profilerneuerungswerkzeug nach einem der Ansprüche 1 bis 11 verwendet,
dadurch **gekennzeichnet**,
daß der Tiefenwahrnehmungsfühler (4) in eine Reifenlaufflächennut hineingesetzt wird, um den Grund der Nut zu berühren, die Bodenfläche der Grundplatte (7) in Kontakt mit der Laufflächenoberfläche gebracht und das Werkzeug um den Umfang des Reifens herum bewegt wird, so daß die Profilerneuerungsklinge (6) eine neue Laufflächennut schneidet.

13. Ein Verfahren zur Profilerneuerung eines Reifens nach Anspruch 12,
dadurch **gekennzeichnet**,
daß der Fühler (4) und die Klinge (6) so eingestellt sind, daß der Vorstehabstand unterhalb der Bodenfläche der Grundplatte (7) der Klinge (6) denjenigen des Fühlers um einen Betrag (d) übersteigt, der gleich der empfohlenen Profilerneuerungstiefe unter dem ursprünglichen Profil ist.

## Revendications

1. Outil de nouveau rainurage de pneumatique, comprenant une semelle (7) ayant une surface inférieure destinée à être au contact d'une surface de bande de roulement de pneumatique, une sonde (4) de détection de profondeur mobile par rapport à la semelle (7) et ayant une extrémité de sonde (4a) qui dépasse sous la surface inférieure de la semelle (7) afin qu'elle soit au contact de la base d'une gorge de la bande de roulement du pneumatique, une lame (6) de nouveau rainurage, adjacente à la sonde (4) et aussi mobile par rapport à la semelle (7) et dépassant sous la surface inférieure de la semelle (7), et un dispositif de déplacement de lame placé entre la sonde (4) et la lame (6) afin que le déplacement de la sonde (4) provoque un déplacement analogue de la lame de nouveau rainurage (6), et un dispositif est destiné à maintenir l'extrémité de la sonde (4a) au contact de la base de la gorge de la bande de roulement lorsque la surface inférieure de la semelle (7) est au contact de la bande de roulement.

2. Outil de nouveau rainurage de pneumatique selon la revendication 1, caractérisé en ce que le dispositif de déplacement de la lame entre la sonde (4) et la lame (6) comporte une liaison mécanique.

3. Outil de nouveau rainurage de pneumatique selon la revendication 1 ou 2, caractérisé en ce que les mouvements de la sonde (4) et de la lame de nouveau rainurage (6) ont la même amplitude et le même sens.

4. Outil de nouveau rainurage selon la revendication 1, 2 ou 3, caractérisé en ce que la distance de saillie de la lame de nouveau rainurage dépasse la distance de saillie de l'extrémité de la sonde d'une valeur (d) qui est égale à la profondeur recommandée de nouveau rainurage sous la sculpture originale de la bande de roulement du pneumatique.

5. Outil de nouveau rainurage selon l'une quelconque des revendications 1 à 4, caractérisé en ce que la largeur de l'extrémité de la sonde (4a) est inférieure ou égale à 5 mm.

6. Outil de nouveau rainurage de pneumatique selon l'une quelconque des revendications 1 à 5, caractérisé en ce que le plan de la lame (6) de nouveau rainurage est incliné d'un angle (α) compris entre 85 et 90° par rapport au plan de la semelle (7), si bien que le bout de la lame de nouveau rainurage est en arrière par rapport au sens de déplacement de l'outil de nouveau rainurage.

7. Outil de nouveau rainurage de pneumatique selon l'une quelconque des revendications 1 à 5, caractérisé en ce que le plan de la lame de nouveau rainurage est incliné d'un angle (α) de 88 à 90° par rapport au plan de la semelle (7) si bien que le bout de la lame de nouveau rainurage est en arrière dans le sens de déplacement de l'outil de nouveau rainurage.

8. Outil de nouveau rainurage selon l'une quelconque des revendications 1 à 7, caractérisé en ce que l'extrémité de la sonde (4a) est arrondie si bien qu'elle peut facilement glisser le long de la base d'une gorge de la bande de roulement du pneumatique.

9. Outil de nouveau rainurage selon l'une quelconque des revendications 1 à 8, caractérisé en ce que l'extrémité de la sonde (4a) comporte un rouleau.

10. Outil de nouveau rainurage selon l'une quelconque des revendications 1 à 9, caractérisé en ce que l'extrémité de la sonde (4a) comporte une bille.

11. Outil de nouveau rainurage selon l'une quelconque des revendications 1 à 10, caractérisé en ce que le dispositif destiné à maintenir l'extrémité de la sonde (4a) au contact de la base de la gorge de la bande de roulement lorsque la surface inférieure de la semelle (7) est au contact de la bande de roulement est un dispositif à ressort.

12. Procédé de nouveau rainurage d'un pneumatique par utilisation de l'outil de nouveau rainurage selon l'une quelconque des revendications 1 à 11, caractérisé en ce que la sonde (4) de détection de profondeur est introduite dans une gorge de la bande de roulement du pneumatique afin qu'elle soit au contact de la base de la gorge, la surface inférieure de la semelle (7) est mise au contact de la surface de la bande de roulement, et l'outil est déplacé à la circonférence du pneumatique de manière que la lame (6) de nouveau rainurage découpe une nouvelle gorge dans la bande de roulement.

13. Procédé de nouveau rainurage d'un pneumatique selon la revendication 12, caractérisé en ce que la sonde (4) et la lame (6) sont réglées afin que la distance de saillie, sous la surface inférieure de la semelle (7), de la lame (6) dépasse celle de la sonde d'une valeur (d) qui est égale à la profondeur recommandée de nouveau rainurage sous la sculpture originale.
